# EUROPEAN PATENT SPECIFICATION

(11) **EP 3 037 392 B1**
(45) Date of publication and mention of the grant of the patent: **15.11.2017**
(21) Application number: 15201597.0
(22) Date of filing: 21.12.2015
(51) Int. Cl.: C03B 23/213, C03B 23/06, C03B 23/00, A47G 19/22, A47G 33/00

(54) **GLASS PRODUCT WITH SHAPED STEM AS WELL AS METHOD AND DEVICE FOR ITS PRODUCTION**
GLASPRODUKT MIT GEFORMTEM STIEL SOWIE VERFAHREN UND VORRICHTUNG ZU DESSEN HERSTELLUNG
PRODUIT EN VERRE À TIGE MOULÉE AINSI QUE SON PROCÉDÉ ET APPAREIL DE FABRICATION

(30) Priority: 22.12.2014 SK 501542014 U
(43) Date of publication of application: 29.06.2016
(73) Proprietor: RONA, a.s., 020 61 Lednicke Rovne (SK)
(72) Inventor: Hlavác , Ing.Milos, 018 52 Pruské (SK)
(74) Representative: Porubcan, Róbert

(56) References cited:
- WO-A1-2012/059288
- BE-A- 397 277
- CN-A- 102 727 044
- CZ-A3- 9 601 377
- CZ-B6- 296 399
- DE-A1- 19 855 240
- FR-A1- 2 108 930
- SK-B6- 277 715
- US-A- 5 824 130
- US-A1- 2005 242 102

## Description

### Field of technology

The invention concerns the method of production of the glass product, mainly stemware, where the stem is spatially shaped during the movement on the production line, for example on the production line of the welding and stretching of the stem. The invention also describes the device for the shaping of the stem and the glass product itself, mainly stemware, which is produced by the new method with the repeatable precision.

### Prior state of the art

With manual production of the glass products the glasses could have been produced as a very individual products with different shapes and artistic features. Industrial production unified the shape of the products, which is now basically strictly defined by the used moulds, or by the method of stretching. There is an effort to achieve the individual shapes of the product in industrial production, whereby the high productivity of the production - that is, repeatability of the shapes and dimensions - should be preserved, while the shapes can be individualized according to the demands of the customers. The published patent CZ296399B discloses a method where the finished and cooled product is attached into the fixation head, then the stem is heated to 50 to 100 K beyond the Littleton softening point and the heated part of the stem is then subsequently shaped, for example by stretching, rotating, twisting, pressing, etc. This solution allows to achieve individually shaped stem, but the productivity of the shaping is very low. In order to achieve the productivity of the shaping at the level of the industrial device, a production line with the size of the machine for the welding of the stem to the bowl would be needed. The disadvantages are the repeated manipulation, the attachment of the product to the fixation heads of the single-purpose device, and the high energy demands, since the glass is formed, or shaped, after the final cooling in the production.

The method of production according to CZ9601377A3 (CZ287552) has low productivity, too. Here the way of achieving the desired shape of the stem - subsequently welded or glued to the bowl - is not even disclosed.

Publications WO 2012059288 A1, CN102727044A disclose the glass with the shaped stem, but these publications are not concerned by the method of achieving the desired shape of the stem. The stem is shaped in one plane only; the deformation is 2D, not 3D.

The glass with the stem according to EP 1591046 A1 has deformed stem and the bowl; the deformation is in one plane only and the file does not disclose the method of the production of such glass.

The solution according to JPS61168546A is designed to even out the production irregularities of the glasses - that is, for the process that is opposite to the desired shaping of the stem outside the axis of the product. The stem could have been shaped under the opposing influence, but this could tilt the base of the stem, too, which is unacceptable, because the glass wouldn't stand straight.

Publication US3773490 (A) discloses a productive method of the production of the stem, but only in symmetric shape without deformation. Similarly, solution according to SK277715B6 only produces symetrically stretched shapes.

It is possible to shape the stem in the mould where it is pressed. But this method cannot be used for the stretched stems where only parison is pressed. The subsequent stretching leads to evening out of the originally pressed shape. The pressing of the irregular shapes can create technological problems with the opening of the two-part mould, too; the stem could have been shaped with the bent in one plane only, but not spatially.

Such solution is needed and not known, which would be highly productive and allow repeated and precise shaping of the stem, and it will be not technologically and spatially demanding.

### Subject matter of the invention

The abovementioned deficiencies are significantly remedied by the method according to claims 1 to 6. It is a method of production of a glass product with the shaped stem, where the product is in the process of the production moved on the line between individual working positions, whereby it is attached by the bowl and the base of the stem. The stem is heated on the line, for example, it is heated during the welding with the bowl or during the stretching of the parison of the stem to the final form, where the stem is shaped outside the axis already before final cooling on the production line, according to this invention, which essence lies in the fact that from on side the moulding (or forming) element acts contactly upon the stem moving on the production line during heat, whereby this element gets to the path of the movement of the stem by the reverse movement. The German term for the stem is "der Stiel". Besides the movement on the path the product moves rotationally around its axis, which ensures the even heating from the burners located only on the one side of the path of the movement of the product.

The significant feature of the method is that the stem is shaped already on the production line of the primary production, that is, not after the finishing of the existing production process as is known in the prior state of the art. This brings about two advantages. First is the high productivity of the shaping which corresponds to the capacity of the production device; it is not necessary to attach the product anew to the special shaping device; the device which is used during the primary production is used here as well. The attachment is crucial so that the deformation is limited to the stem; the tilt of the bowl is undesired. The term "attachment of the bowl" or "attachment by the bowl" or "attachment through the bowl" includes the attachment by means of the cap of the bowl, which is commonly used in the production and which is removed at the end of the production process.

The other advantage are the low energy demands. The methods known in the prior state of the art required new heating of the shaped product, which increases the consumption of the gas. The present invention saves the energy and thus is maximally ecological, because it uses the existing heating of the stem within existing technology of the production of glass products. Naturally, short heating on the production line can be included in our invention, but this always makes use of the existing heat of the stem from the primary production. Usually a heat produced in the process of welding of the stem with the bowl or in the process of welding and stretching of the parison of the bowl is used. This method of shaping of the stem is advantageous especially during the production of so-called stretched bowl, but it is not limited to such technology. The stem in this invention is shaped in the phase before the final cooling of the product, which allows to take the product off the production line and place it, for example, on the conveyor belt. The final cooling therefore denotes the cooling within the framework of the production line; it does not need to be the cooling to the temperature of the environment. The shaping according to this invention takes place before this final cooling so that the heat from the previous step of the processing of the stem is used.

The term "during the heat" in this invention means that the glass melt has a temperature that is needed for the given step. For example, the temperature of the welding of the parison of the stem to the bowl can be 820 ±20 °C. The temperature of the glass melt cooled in order to achieve dimensional and shape stability can be below 380°C. The stem or its part intended for shaping, respectively, can have this temperature as the remnant from the working cycle, which precedes the shaping, for example the stretching of the stem. Pursuant to the particular temperature situation, the procedure will usually involve the additional heating by means of burners, which will act locally upon the stem just before the entering into the line of the forming element. This additional heating is less energy demanding and it will only offset the temperature losses during the movement of the product from the previous working place on the line. During the stretching of the stem itself the stem is hot and malleable.

The forming element acts upon the stem contactly (mainly by pressing) from one side. Thanks to this it is not necessary to have access from two sides of the product. This is significant advantage, too; this method can be used for the existing carousel welding or stretching machine, where the semifinished product can be approached from the outer side of the circumference of the machine. The method can be realized on the existing machine without interfering with its inner arrangement; it suffices if the additional device is attached on the outer side of circumference of the machine, whereby the forming element will move into the path of the stem.

The forming element will move into the path by the reverse movement; the particular kinematics of the reverse movement in relation to the direction of the movement of the product can vary. For the simple setting of the device it will be preferable if the reverse movement of the forming element is realized in the plane that is perpendicular to the movement of the product; for example, in case of the carousel line, it is perpendicular to the tangent of the circular movement of the product. In such case the forming element moves by the shortest possible movement to the line and then out of the line of the movement of the product. The depth of the pressing of the stem and therefore the resulting shape of the stem can be set by setting the length of the movement of the forming element, for example by setting the stop of the movement device of the forming element. The reverse movement of the forming element can be linear and/or rotational.

It will be preferable if the forming element will move not only reversely into the path of the stem and out of that path, but if it also will be at least in the time of contact of the forming element with the stem rotate around its axis. The moving forming element in the contact with the heated stem deforms the glass melt of the stem in two planes, which allows us to achieve spatially shaped stem. The stem is folded and also twisted. The folding is caused by the linear movement of the forming element, the twisting is cause by the rotational movement of the forming element.

The forming element will have rounded edges of the contact zone so there are no notches in the glass melt. The shape of the forming element will be dependent on the kinematics of the forming element relative to the path of the movement of the product. On the carousel lines the product rotates in the rotational heads - besides the movement on the circumference - so that the even influence of the heat from the burners placed on the one side of the line is achieved.

From the point of view of the simplicity of the device it will be preferable if the forming element moves to the path of movement of the product linearily; linear movement can be easily achieved by the hydraulic cylinder, linear electric motor, or - which is especially preferable - by means of pneumatic cylinder. The source of the pressed air is usually the the original part of the production line. The other, rotational part of the movement of the forming element can be ensured by the pneumatic cylinder, too. Since it is in principle not necessary to rotate with the forming element more than 180° - we do not want the forming element to rotate to the opposite position, in fact, it is even not that necessary to rotate the forming element more than 90° -, it will be preferable if the rotational part of the movement of the forming element is ensured by the pneumatic cylinder. The use of the pneumatic cylinders gives the device robustness and durability; at the same time the mechanical setting of the end position of two pneumatic cylinders can simply set the exact position and rotation of the forming element and thereby the resulting shape of the stem. The place of the folding within the height of the stem is simple set by setting the height of the holder of the movement device (or system) of the forming element.

After the shaping of the stem the forming element returns to the initial position, so it no longer interferes with the moving stem or with the moving rotating stem, respectively. Subsequently, the stem is cooled below the temperature of malleability, which secures its repeated dimensional and shape stability. The product is de-tempered, which is common process in case of production of the utility glass. The drinking edge is processed similarly, so that the bowl can be practically used.

If the stem is high enough, the multiple folds can be produced in it in such a way that after the contact with the first forming element the product travels on the line to the place where the second forming element interferes into the line with its reverse movement in the different height than the first forming element in the previous phase. The subsequent involvement of multiple devices in various heights can achieve multiply folded and/or twisted stem.

The deficiencies mentioned in the prior state of the art are also significantly remedied by the device for the shaping of the stem during the production of the glass product on the production line according to claims 7 to 14, where the products are attached through the bowl and the base of the stem which move during the heat on the production line, according to this invention, which essence lies in the fact that it has a forming element which is movably placed in the holder and has a movement device (or system) for the reverse movement of the forming element to and out from the path of the movement of the product on the production line, and the holder is designed for placement by the production line on the one side of the path of the movement of the product in such a way that the moving forming element interferes into the path of the movement of the product on the production line. The forming element has a contact zone with the rounded edges.

The holder can be realized as a stand which can be firmly attached to the floor at the given part of the line, or it can be realized as a console which is mounted directly onto the frame of the machine in the production line. What is important is that the holder is capable of transferring all the force reaction from the forming element and especially that it is capable to capture the inertia forces of the movement device (or system) so that the exact desired position of the forming element in the path of the movement of the product can be repeatedly achieved. In preferable arrangement the forming element can be attached on the movable end of the linear motor; in such case it will realize linear reverse movement. In another arrangement the forming element can be attached on the lever and it will realize the circular movement. It will be preferable if the movement system involves electric, hydraulic or - in especially preferable arrangement - pneumatic linear motor. In such case the forming element will be attached at the end of the piston rod directly or by means of the driving plate. The cylinder can be attached to the holder by means of the movable wiring which sets the end position of the piston rod and forming element, too. This mechanical setting is preferred for its simplicity and reliability in hot and aggressive environment of the production line. In another arrangement the electronic setting of the end position of the forming element can be used, too.

The movement system will usually realized the move that is perpendicular to the tangent of the path of the movement of the product on the production line. The holder will therefore be oriented in such a way that the horizontal pneumatic cylinder has an axis of the movement that is perpendicular onto the path of the movement on the production line.

In order to achieve a spatially shaped stem it is preferable if the movement system involves not only the devices for the reverse movement of the forming element from and into the path of the movement of the product, but also the devices for the rotation of the forming element, mainly rotation around the axis that is in parallel with the axis of the reverse movement of the forming device. The rotational movement can be achieved by means of the stepper electric motor, or motor with the worm gear drive or linear motor, which act upon the tiltable placement of the forming element. From the point of view of simplicity and reliability it will be preferable if the other pneumatic cylinder is used for the rotation of the forming element, which acts through the lever and crank onto the tiltable placement of the former pneumatic cylinder which realizes a pressure or pushing reverse movement into the line of the movement of the product.

The forming element, the pressure thumb in case of the simple reverse movement (without the rotational part) will have the form of the short strip with the rounded contact edge; the diameter of the rounding will correspond to the thickness of the strip. In case the forming element moves not only slidably, but also rotably - at least during the contact with the stem - it will be preferable if the strip has a shape of the fork with the arms. The middle of the fork is designed for the pressing of the stem, which produces a fold in it. The middle of the fork connects the lines of the arms and it is produced as a rounded transition between the arms. It still holds - similarly to the case with the simple pressure thumb - that the edge is rounded on the contact side. The fork has a shape of wide letter "V". Thanks to the rotational element in the rotation of the forming element the sides of the arms of the fork touch the stem in two opposite places; that is, they touch it in the place above the fold of the stem and below the fold of the stem. This produces something like clutch between the arms of the fork and the rotating fork with its arms twists the stem. Since the stem besides the movement in the path of the movement of the product on the production line will usually realize a rotational movement in the axis of the stem, it is preferrable if the fork of the forming element has two differently long arms, the longer leading arm and the shorter trailing arm. This diminishes the undesired slidable movement of the glass melt on the surface of the forming element, which could lead to the stretching of the stem with the eventual irregularities and faults. The achievement of this goal can be supported by the different thickness of the strip of the forming element on the longer leading side of the fork. Even at the thinner part of the strip the outer edges will be rounded. The forming element is produced from the sufficiently heat resistant material; it is smooth and preferably it can be produced from hard wood. It is preferable if the forming element is attached in such a way that it allows for its simple and quick substitution. For this purpose one can use a driving plate with the openings through which the forming element is bolted down and the screws on the back side of the driving plate can be approached by common tools.

The conduction or controlling of the movement system can be connected to the control unit of the machine of the production line; it will receive impulses from the control unit to press the forming element to the path of the stem. The completely independent direction and controlling is possible, too, where the position of the stem is identified by the sensor in the sufficient advance and the movement system receives the impulse for the ejection of the forming element. In common realization the electric, or electronic device will control the electromagnetic valves of the air distributor, which is connected, by means of cables or wiring, to the pneumatic cylinders on one side and with the source of the pressed air on the other side. Other methods of connection of the basic machine and device according to this invention are possible; in principle the movement of the forming device will always be coordinated according to the basic movement of the basic machine.

The deficiencies in the prior state of the art are significantly remedied by the glass product itself according to claim 15. The product with the shaped stem is produced by stretching during the heat, whereby the surface of the stem is smooth, without connecting joints and edges, according to this invention, which essence lies in the fact that the stem has in the part between bowl and the base at least one fold out from the axis of the product. The absence of the connecting edges between the stem and the bowl and between the stem and its base means that the stem is not glued or otherwise additionally connected to the rest of the product, but that it is produced during the heat with the rest of the product, while the shaping and casting of the joints takes place in this production.

In the preferable arrangement the stem will be in the zone with the fold twisted, too, in such a way that the tangent towards the axis of the stem will run at least in part of the twist outside the axial plane of the product. The axis of the stem will therefore be askew, not intersecting the vertical axis of the bowl or the base, at least in part of the twisting.

The advantage of this invention is the high productivity of the shaping, the simple mounting in the existing technology of the production, low energy demands and easy manipulation. Significant shape and dimensional precision is another advantage, whereby the desired shape of the stem can be achieved by simple setting of the device. Each product has exactly defined height and depth of the fold and does not suffer from inner stresses in the deformed stem.

### Brief description of drawings

The invention is further disclosed by drawings 1 to 21. The used scale and ratio of the size of the cap of the bowl, the bowl, the stem, the base of the stem and the forming element is non-binding, informative, or directly altered in order to increase the clarity. The chosen ratios, sizes and shapes cannot be interpreted as limiting the scope of protection. In all drawings the semifinished product of the glass or glass itself are depicted without the attachment into the respective rotational heads; in reality the semifinished product of the glass or glass itself moves on the production line in such a way that it is attached on both sides - it is attached through the base of the stem and through the bowl or cap of the bowl, respectively. The attachment on both sides during the shaping according to this invention is absolutely necessary. For the purposes of clarity, the distribution of the pressed air and the hoses or tubes leading to the pneumatic cylinders, as well as other details common for the regulation, conduction and control, are not depicted, too.

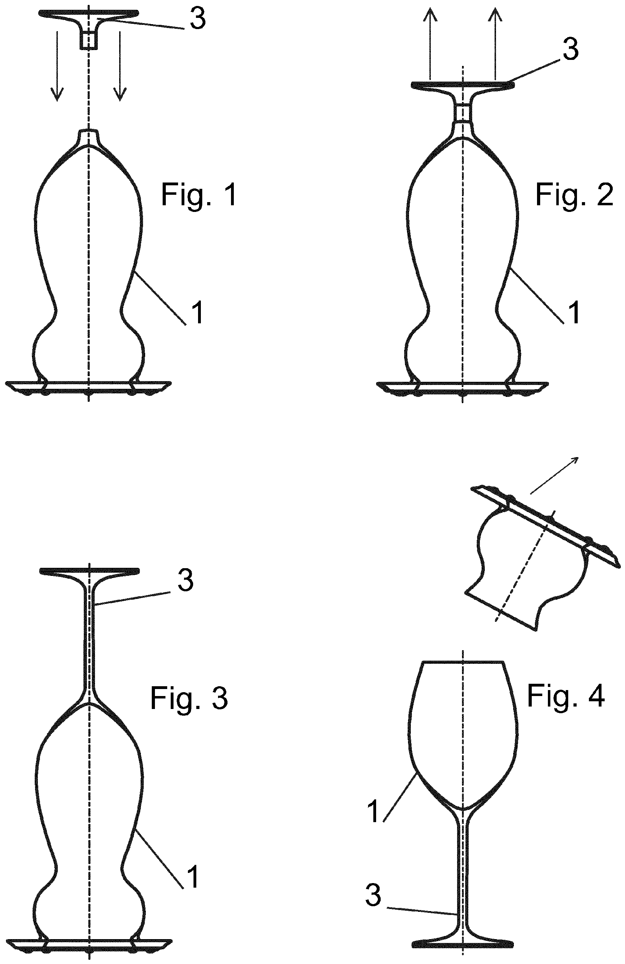

Figures 1 to 4 depict the stages of the original production of the glass with the stem. Figure 1 shows the bowl with the cap before the welding with the parison of the stem. Figure 2 depicts the parison of the stem attached to the bowl; figure 3 is a stem stretched to the final form. Finally, figure 4 depicts the removal of the cap of the bowl.

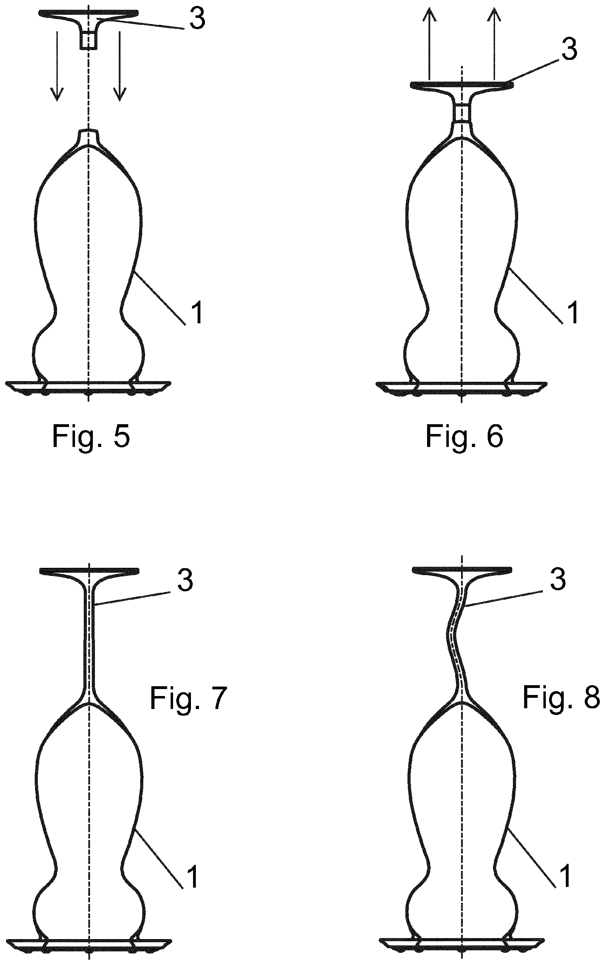

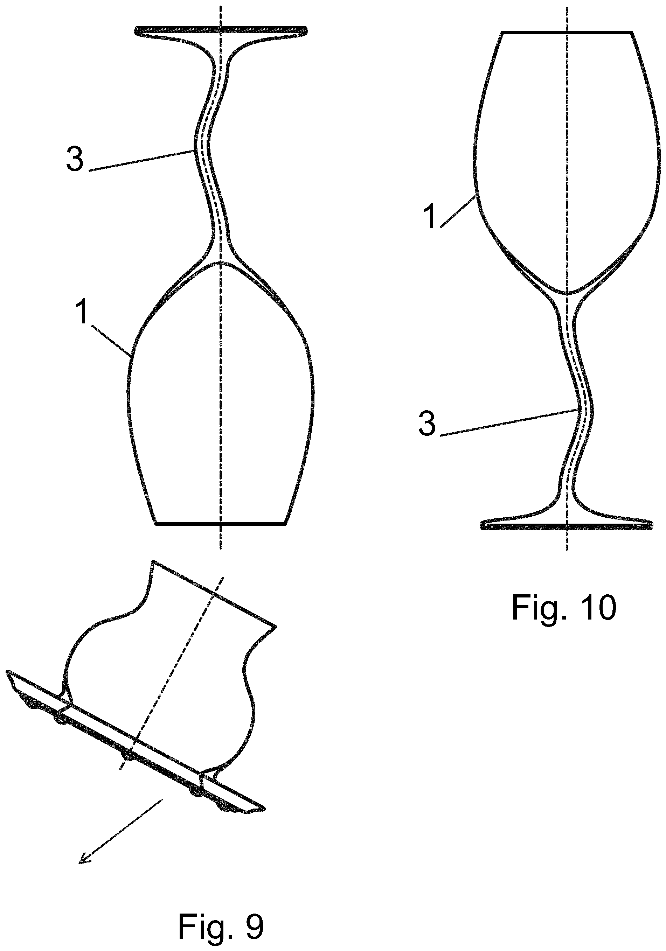

Figures 5 to 9 depict the production stages equivalent to the stages in figures 1 to 4. Figures 8 and 9 depict the glass in the stage of the shaping of the stem. Figure 10 shows the finished glass.

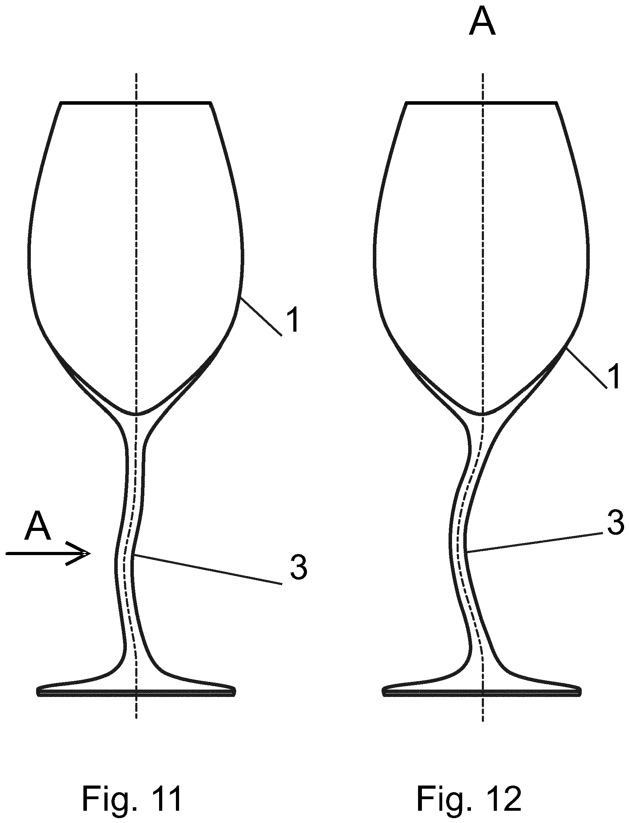

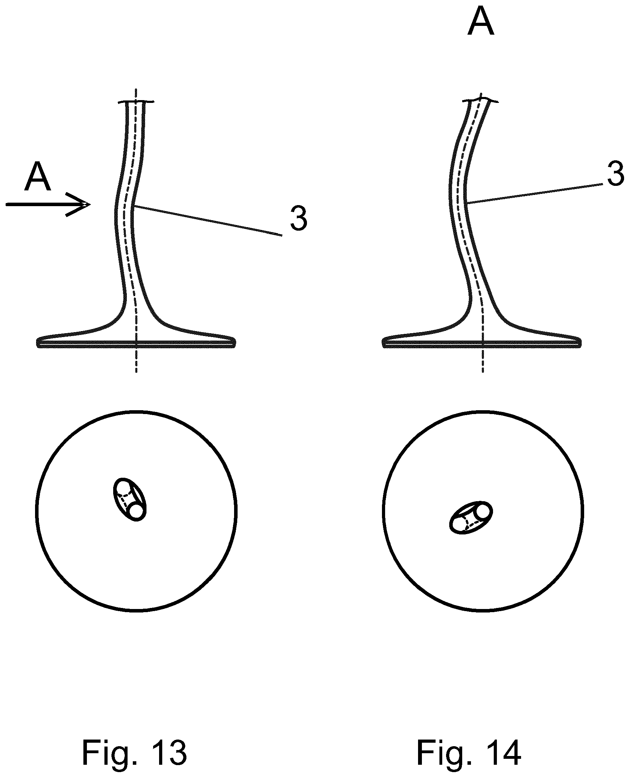

Figure 11 shows a glass with the shaped stem in one view; figure 12 shows the same in the other, perpendicular view denoted by the letter A. Figures 13 and 14 are detailed views of the process of the shaped stem with the highlighted axis and without the bowl, where in the lower part of the figures is a ground plan where the spatial fold of the stem is visible.

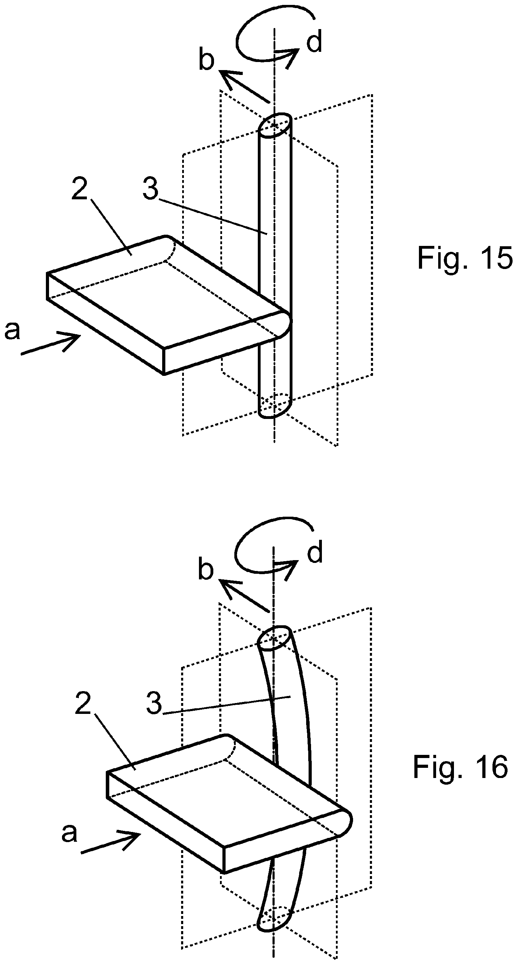

Figures 15 and 16 show the interaction of the forming element and the stem, where the forming element moves to the path of the movement of the stem. Figure 15 is a forming element moving into the view; figure 16 has the stem in the view. Forming element of figures 15 and 16 has a shape of a simple, rounded strip. The arrows denote the direction of the movement of the stem and the forming element.

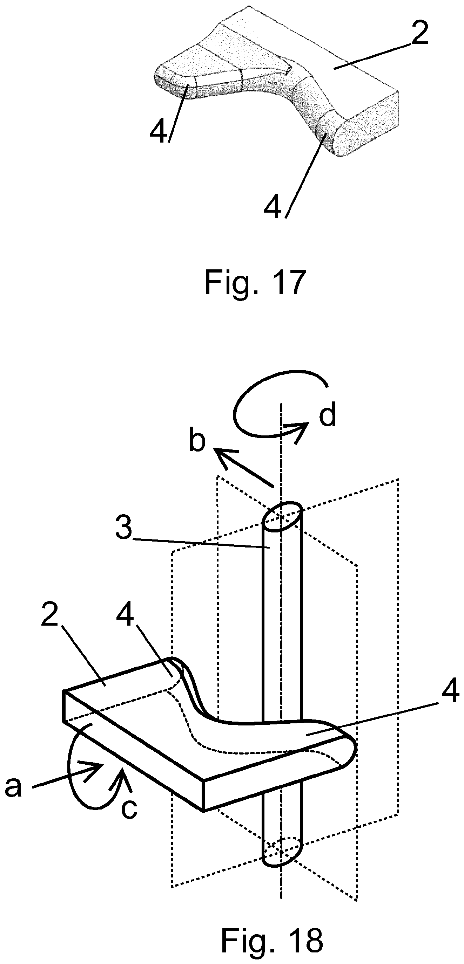

Figure 17 depicts the fork-shaped forming element with the arms and the rounding on the contact side. Figure 18 depicts the fork-shape forming element moving into the view, while it just begins the rotational movement. For the purposes of clarity, figures 15 to 18 depict the stem without the bowl and the base. The arrows denote the direction of the movement of the stem and the forming element.

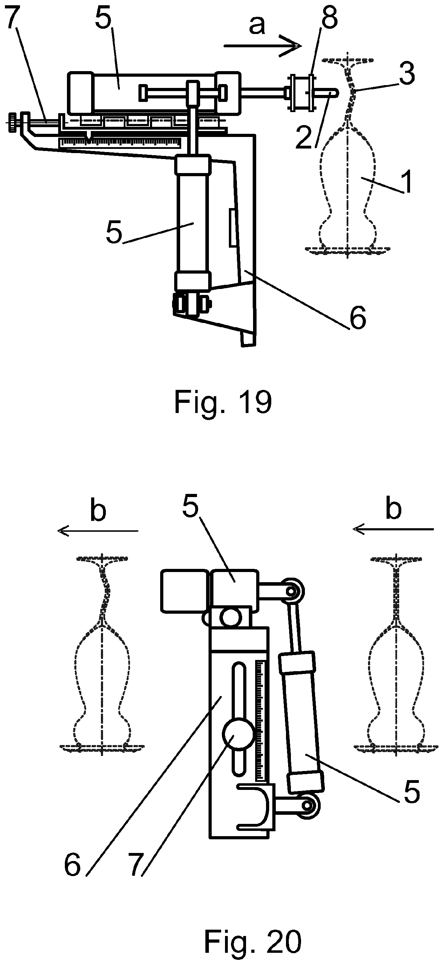

Figure 19 is a view of the device in the direction of the movement of the product on the production line with the tilting forming element. For the purposes of clarity, the basic machine of the production line is not depicted on the figures 19 to 21; the position of the semifinished product of the glass with the cap of the bowl is depicted by the dashed line.

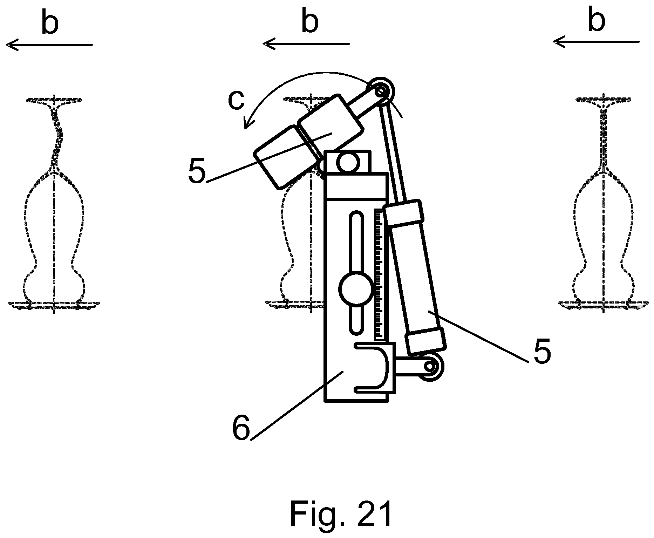

Figure 20 depicts the device from the view that is perpendicular to the movement of the product on the production line, where the pneumatic cylinder is retracted and the forming element does not interfere into the path of the movement of the products. Subsequently, figure 21 depicts the device in the position with the rotated forming element in the view, whereby the second pneumatic cylinder has tilted the base with the former pneumatic cylinder.

### Examples of realization

### Example 1

In this example according to figures 5 to 14 and 17 to 21 the stems 3 of the glass stemware - for example a wine glass - are being shaped. Such product has been hitherto produced with straight stem 3 (according to figures 1 to 4). First by blowing on the blowing machine a bowl 1 with the cap is produced. The cap serves for the attachment of the product in the machine device in the production line - mainly carousel machine - where the bowl 1 is welded with the stem 3. The stem 3 is produced by pressing of the glass melt in the two-part mould; after the opening of the mould it is taken out and transferred towards the carousel machine for welding. In this example the stem 3 is welded with the bowl 1 in the upside down position, whereby the bowl 1 is down. Both parts are attached in the rotational heads, which during the production not only move to the individual working positions on the circumference of the carousel, but also rotate in the axis of the stem 3 and the bowl 1. The axial rotation ensures the even heating from the burners, which are distributed from the outer side on the circumference of the carousel. Carousel's rotational heads are always placed in pairs above each other; the upper rotational head holds the stem 3, the lower holds the bowl 1. The firm attachment of both parts, bowl 1 and the stem 3, which is necessary for the process of welding and stretching of the stem 3, will be used for the shaping, too; this attachement ensures that during the shaping the angular position of the bowl 1 towards the base does not change; the shaping of the stem 3 therefore does not cause the undesired deformations and the tilting of the mutual position of the bowl 1 and the base. In another example a different position or different way of attachment and position during stretching and welding can be used.

In the rotational heads both parts enter the flames of the gas burners which ensure the heating of the jut of the bowl 1 and the end of the stem 3 to the welding temperature 820 ±20 °C. Rotational heads move close to each other and press the stem 3 to the bowl 1 and the glass melt is welded. After the welding the rotational heads with the attached stem 3 and the bowl 1 start to distance from each other. This distancing causes the semifinished product to deform and stretch, whereby only that part of the semifinished product which has a necessary temperature is stretched. The bowl 1 and the base of the stem 3 have lower temperature, therefore these parts are no longer formed. By setting the direction of the added heat, for example, by setting the direction of the gas burners and their regulation, a desired heat field is produced, which defines the zone of the stretching of the stem 3. The length of the stretching is set on the machine by settting the distance at which the rotational heads distance from each other after the welding of the stem 3 with the bowl 1. Thanks to the natural features of the liquid glass melt, the stretching is accompanied by the thinning of the stem and smoothing out of the transitional irregularities; this approach smooths the joint in the welding plane. Since the semifinished product axially rotates during the movement and the influence of the heat is therefore even, we not only achieve smooth outer surfaces but also circular coaxial cross-section.

Up to this moment the production is essentially similar to the prior state of the art. After the stretching of the stem 3 to the desired shape the glass is moved further on the production line, that is, around the circumference of the carousel. Its temperature diminishes from 820 ±20 °C to the temperature of shape stability of 380°C. The additional device for the shaping of the stem 3 according to this invention is attached by the holder 6 on outer circumference of the base of the carousel welding and stretching machine. It is placed in such a way that the glass product has at the given point of the production line a stem 3 heated to the shaping temperature; alternatively a burner is added at this point of the line for the additional heating of the stem 3.

The holder 6 is height adjustable, which can set the vertical position of the tiltable placement of the pneumatic cylinder 5 against the height position of the stem 3 on the production line. Horizontally placed pneumatic cylinder 5 moves by the driving plate 8, which is in parallel in the second, from the point of view of pressure not connected cylinder in such a way that the driving plate 8 lacks the rotational freedom against the pneumatic cylinder 5. The pneumatic cylinder 5 is attached in the rotational placement, in this case in the simple hinge, which allows to swing with the whole cylinder 5 and the driving plate 8. The axis of swinging runs in parallel with the axis of the pneumatic cylinder 5. The pneumatic cylinder 5 is placed by the holder 6 perpendicularly to the tangent of the circumference of the carousel machine. The second pneumatic cylinder 5, which controls the swinging of the former, horizontal pneumatic cylinder 5, realizes the angular rotation of the former pneumatic cylinder 5 and driving plate 8 and therefore rotates the forming element 2, which is bolted down by the screws on the driving plate 8. The driving plate 8 is used mainly for the simplification of the attachment and substitution of the forming element 2. In this example it is bolted down by two screws. Their heads can be approached from the back side of the driver.

The second pneumatic cylinder 5 is on the lower side attached to the holder by the joint; the piston rod acts through the lever onto the swinging placement of the former, horizontal pneumatic cylinder 5.

The horizontal pneumatic cylinder 5 with the hinge is at the same time placed on the slidable groove, whose slidable setting is allowed for by the feed screw. The rotation of the screw causes the horizontal pneumatic cylinder 5 and with it the driving plate 8 and the forming element 2 in its end position to move to the path and retreat from the path of the movement of the glass on the line. This allows for simple mechanical setting of the depth of the fold of the stem 3. In order to achieve simpler setting, the slidable conduction of the horizontal cylinder 5 has a metric measuring device showing the set position. The holder 6 has a setting device 7 as well for the setting of the vertical position for the simpler height adjustement of the whole device relatively to the basic machine.

The pneumatic cylinders 5 are controlled by the pressed air distributed in the distributor according to the instructions from the control unit. The control unit of the carousel machine receives the information concerning the position of the glass which comes to the place with the mounted device. In the given moment the horizontal pneumatic cylinder 5 moves out whereby at the end of the movement the second pneumatic cylinder 5 rotates the horizontal pneumatic cylinder 5 in the hinge of the placement. At this moment the fork-shaped forming element 2 touches the stem 3 and pushes it into the fold and the two arms 4 of the forming element 2 rotate the stem 3. The glass with the stem 3 at the same time moves further on the circumference of the carousel and it also rotates in the rotational heads. The axis of the swinging of the horizontal cylinder 5 is below the axis of the piston rod and the swinging is directed in agreement with the direction of the movement of the product on the production line, which allows for concurrence of the forming element 2 with the moving stem 3. The spatial shaping of the stem 3 takes place at the temperature ranging from the temperature of dimensional stability 380°C to the temperature of stretching 820°C.

The forming element 2 is fork-shaped and has two arms 4. One is longer, leading, the latter is short and trailing. The contact zone of the strip of the forming element 2 is rounded in the transverse direction. The longer, leading edge is thinner. The arms 4 of the fork include parallel parts which lead to roundings. In this example the forming element 2 is attached to the driving plate 8 and it is rectangular. At the corners it is attached by the four screws with the distance tubes to the basic plate attached to the piston rod. A space is produced between these plates for the simple bolting down of the forming element 2, which in this case has two blind openings with the threads for the crews.

After the shaping of the stem 3 the rotational heads move around the carousel to the places where they are no longer heated by the burners; the stem 3 is cooled below the temperature of the shaping 380°C. In this step the dimensional and shape stability and repeatable precision is ensured; the semifinished product can be taken out of the attachment in the rotational heads. At this stage the semifinished product still has the cap of the bowl 1, which is later removed from the bowl 1 by the known methods. The removal of the cap and rounding of the edge after the cap and the de-tempering are all realized by the known methods.

A person skilled in the art can on the basis of the example produce other similar versions for the production of similar products; the glasses can have stems 3 with various shapes, folds and angles of twisting.

The device is portable, which means that the holder 6 can be removed from the basis of the carousel and transferred to the other place or to the other production line. It is possible to use mutliple devices on a single line if one wants to achieve multiple folds in one stem 3.

The solution is advantageus also because the basic technology of the production is identical with the standard production of the stretched stem 3; the usage of the new method does not require the adjustment of the original machine or production line; it suffices that the new device is mounted onto the line.

### Example 2

In this example according to figures 5 to 10, 15 and 16 the stems 3 of the glasses are shaped by the forming element 2, which has a shape of the simple strip. The forming element 2 interferes into the path of the movement of the glass with the simple movement of the piston rod. The fold of the stem 3 is set by the size of the pull-out of the piston rod.

The method according to this example with the simple shaping without twisting can be used as the second step of the shaping. The device is in such case mounted on the base of the machine after the first device according to the example 1. The device can be supplied by the contact, optical or ultrasound recognition of the shape of the stem 3 after the shaping, which will serve as the automatized control of the precision of the shaping of the stem 3. Potential deformation or excessive wear of the forming element 2 will manifest itself as the deviation which will ring the alarm in the control unit.

### Industrial applicability

Industrial applicability is obvious. According to this invention it is possible to repeatedly produce glass products, mainly stemware, with the spatially shaped stem. This achieves the desired aesthetic shape and ensures the high productivity of the machine processing and industrial production; the resulting glass products are dimensionally and shape uniform.

### List of related symbols

1- bowl
2- forming element
3- stem
4- arm of the forming element
5- pneumatic cylinder
6- holder
7- setting mechanism
8- driving plate

a - movement of the forming element to the path of the product
b - movement of the product on the production line
c - rotation of the forming element
d - rotation of the product in the fixation head

## Claims

1. A method of a production of a glass product with a shaped stem (3), where the product in a process of its production moves on the production line attached through a base of the stem (3) and a bowl (1), or attached through the base of the stem (3) and a cap of the bowl (1), where on the production line the stem is heated during welding with the bowl or during stretching of a parison of the stem to the final shape, whereby at least part of the stem (3) is heated to a temperature of shaping,
**is characterized by the fact,** that
before cooling of the product on the production line, where at least part of the stem (3) intended for the shaping is heated to a temperature ranging from 380°C to 840°C, a forming element (2) reversely moves into a path of the movement of the stem (3), the forming element (2) thereby moves in a plane which is perpendicular to the direction of the movement of the product on the production line,
and from one side the forming element (2) contactly pushes on the moving stem (3), whereby the forming element (2) rotates, preferably it rotates around an axis that is parallel or identical with a direction of its reverse movement, and after the pushing the stem (3) is folded and twisted.

2. The method of the production of the glass product according to claim 1 i s **characterized by the fact,** that the product in the process of its production moves on the production line in a circular path and the forming element (2) moves in a plane that is perpendicular to a tangent of the circular movement of the product on the production line.

3. The method of the production of the glass product according to claim 1 or 2 i s **characterized by the fact,** that the reverse movement of the forming element (2) is linear and/or rotational and/or composed of a rotation and a shift and the forming element (2) is moved by means of an electric or hydraulic or pneumatic motor, preferably linear motor, especially preferably by means of a pneumatic cylinder (5), whereby a fold of the stem (3) is set by setting a stop of a movement system of the forming element (2).

4. The method of the production of the glass product according to any of the claims 1 to 3 is **characterized by the fact,** that the movement of the forming element (2) is coordinated with the movement of the product on the production line and by means of a connection with a control unit and/or by sensing a position of the product entering a zone of shaping.

5. The method of the production of the glass product according to any of the claims 1 to 4 is **characterized by the fact,** that the stem (3) is shaped in subsequent steps on the production line, where multiple forming elements (2) subsequently move into the path of the stem (3).

6. The method of the production of the glass product according to any of the claims 1 to 5 **is characterized by the fact,** that after the shaping of the stem (3) and its cooling below temperature of a shape stability the cap of the bowl is removed (1).

7. A device for a shaping of a stem (3) during a production of a glass product on a production line, where the products are attached through a bowl (1) and a base of the stem (3) or through a cap of the bowl (1) and the base of the stem (3) that move on the production line during heat
**is characterized by the fact**, that
it has a forming element (2) which is movably placed in a holder (6),
it has a movement system for a reverse movement of the forming element (2) to a path and out of the path of the movement of the product on the production line,
the holder (6) is designed for a placemenet by the production line from one side of the path of the product in such a way that the moving forming element (2) interferes into the path of the product on the production line,
the forming element (2) has a contact zone with rounded edges,
and the forming element (2) is rotably or tiltably placed in an axis that is identical or parallel to the direction of the reverse movement,
whereby the movement system is designed for a rotation or swinging of the forming element (2) at least during its contact with the stem (3).

8. The device for the shaping of the stem (3) according to claim 7 i s **characterized by the fact,** that the holder (6) is a stand designed for an attachment to a floor in a respective part of the production line or the holder (6) is a console designed for the attachment to a frame of the production line.

9. The device for the shaping of the stem (3) according to claim 7 or 8 is **characterized by the fact,** that the movement system includes a linear electric and/or a linear hydraulic and/or a linear pneumatic motor.

10. The device for the shaping of the stem (3) according to any of the claims 7 to 9
**is characterized by the fact,** that the forming element (2) has a shape of a pressure strip with a rounded contact edge.

11. The device for the shaping of the stem (3) according to any of the claims 7 to 10
**is characterized by the fact,** that the forming element (2) is fork-shaped with two armes (4) which are connected by rounding, preferably two differently long arms (4), one longer leading arm (4) and an other shorter trailing arm (4).

12. The device for the shaping of the stem (3) according to any of the claims 7 to 11
**is characterized by the fact,** that it has a pneumatic cylinder (5) whose piston rode is connected with a driving plate (8), and the forming element (2) is attached on the driving plate (8) and it has a setting mechanism (7), too, for a setting of a stop of the reverse movement and/or a height or a level of the forming element (2).

13. The device for the shaping of the stem (3) according to any of the claims 7 to 12
**is characterized by the fact,** that it is connected with a control unit of the production line in order to receive impulses for activation of the movement system.

14. The device for the shaping of the stem (3) according to any of the claims 7 to 13
**i s characterized by the fact,** that it is portable and arranged for an installation for various welding-stretching machines, preferably it is arranged for the multiple installations on the single production line.

15. A glass product with a shaped stem (3), which is produced by stretching during a heat, where a surface of a glass of the stem (3) is smooth and without connecting edges between the stem (3) and a bowl (1), and between the stem (3) and its base, and where the stem (3) has at least one fold from an axis of the product in a part between the bowl (1) and the base of the stem (3) **is characterized by the fact,** that the stem (3) is twisted in a zone with the fold in such a way that a tangent to an axis of the stem (3) runs outside an axial plane of the product at least in a part of twisting.

## Patentansprüche

1. Das Herstellungsverfahren eines Glasproduktes mit geformtem Stiel (3), wo sich das Produkt im Herstellungsprozess auf der Produktionsstraße am Stielständer und Kuppa (1) befestigt oder befestigt am Gestell des Stiels (3) und Oberformansatz der Kuppa (1) bewegt, wo der Stiel (3) auf der Produktionsstraße beim Schweißen an der Kuppa (1) oder beim Ausziehen der Stielvorform zur Endform angeheizt wird, wobei wenigstens ein Teil des Stiels (3) auf der Produktionsstraße auf die Verformungstemperatur angeheizt wird, **gekennzeichnet dadurch, dass**
es vor Abkühlung des Produktes auf der Produktionsstraße, wo es zumindest ein zur Verformung bestimmter Teil des Stiels (3) zumindest auf die Temperatur im Bereich 380°C - 840 °C angeheizt wird, kommt in die Bahn des Stiels (3) durch reversible Bewegung ein Verformungselement (2),
das Verformungselement (2) bewegt sich dabei in einer Ebene, die orthogonal zur Bewegungsrichtung des Produkts auf der Produktionsstraße steht,
und einerseits drückt der Verformungselement (2) durch Berührung auf den sich bewegenden Stiel (3), wobei der Verformungselement (2) rotiert, es rotiert vorteilhaft um die mit der Richtung seiner reversiblen Bewegung stimmige oder parallel laufende Achse herum, und nach dem Eindrücken wird der Stiel (3) gebogen und gedreht.

2. Das Herstellungsverfahren des Glasproduktes nach Anspruch 1, **gekennzeichnet dadurch, dass** das Produkt im Herstellungsprozess sich auf der Produktionsstraße auf der Kreisbahn bewegt und das Verformungselement (2) sich in einer Ebene orthogonal zur Tangente der Kreisbewegung des Produktes auf der Produktionsstraße bewegt.

3. Das Herstellungsverfahren des Glasproduktes nach Anspruch 1 oder 2, **gekennzeichnet dadurch, dass** die reversible Bewegung des Verformungselements (2) linear und/oder rotierend ist oder aus der Rotation und des Vorschubs zusammengesetzt wird und das Verformungselement (2) sich mit Hilfe eines elektrischen oder hydraulischen oder pneumatischen Motors, vorteilhaft linearen Motors, besonders vorteilhaft mittels eines pneumatischen Zylinders (5) bewegt, wobei die Durchbiegung des Stiels (3) durch einen Anschlag des Bewegungsmechanismus vom Verformungselement (2) eingestellt wird.

4. Das Herstellungsverfahren des Glasproduktes nach beliebigem Anspruch 1 bis 3, **gekennzeichnet dadurch, dass** die Bewegung des Verformungselements (2) koordiniert mit der Produktbewegung auf der Produktionsstraße mittels Verknüpfung mit der Ansteuereinheit der Produktionsstraße und/oder mittels Positionserfassung des in die Verformungszone kommendes Produkts wird.

5. Das Herstellungsverfahren des Glasproduktes nach beliebigem Anspruch 1 bis 4, **gekennzeichnet dadurch, dass** der Stiel (3) nach und nach in mehreren Schritten nacheinander auf der Produktionsstraße verformt wird und zwar so, dass es in die Bahn des Stiels (3) mehrere Verformungselemente (2) nacheinander hinausgeschoben werden.

6. Das Herstellungsverfahren des Glasproduktes nach beliebigem Anspruch 1 bis 5, **gekennzeichnet dadurch,** dassesnachVerformungdesStiels (3) und seiner Abkühlung unter die Temperatur der Formstabilität der Oberformansatz der Kuppa (1) entfernt wird.

7. Die Vorrichtung zur Verformung des Stiels (3) bei Herstellung des Glasproduktes auf der Produktionsstraße, wo die Produkte befestigten mit der Kuppa (1) und mit dem Gestell des Stiels (3) oder mit dem Oberansatz der Kuppa (1) sich in der Wärme auf der Produktionsstraße bewegen, **gekennzeichnet dadurch, dass** sie
ein Verformungselement (2) besitzt, das in einem Halter (6) beweglich aufgenommen ist,
einen Bewegungsmechanismus zur reversiblen Bewegung des Verformungselements (2) in die Bahn und aus der Bahn der Produktbewegung auf der Produktionsstraße besitzt,
der Halter (6) ist zur Platzierung einerseits an der Produktbahn so, dass das sich bewegende Verformungselement (2) in die Produktbahn auf der Produktionsstraße eingreifen kann,
das Verformungselement (2) besitzt die Kontaktzone mit abgerundeten Kanten, und das Verformungselement (2) drehbar oder schwenkbar in der Achse, die identisch oder parallel mit der Richtung der reversiblen Bewegung gelagert ist, wobei der Bewegungsmechanismus an die Drehung oder Schwenkung des Verformungselements (2) zumindest in der Zeit seiner Berührung mit dem Stiel (3) angepasst ist.

8. Die Vorrichtung zur Verformung des Stiels (3) nach Anspruch 7 **gekennzeichnet dadurch, dass** der Halter (6) die Funktion des Gestells besitzt, das zur Befestigung im Boden am entsprechenden Produktionsstraßenteil, oder einer Konsole zur Befestigung zum Produktionsstraßenteil dient.

9. Die Vorrichtung zur Verformung des Stiels (3) nach Anspruch 7 oder 8 **gekennzeichnet dadurch, dass** der Bewegungsmechanismus einen linearen elektrischen und/oder linearen hydraulischen und/oder linearen pneumatischen Motor enthält.

10. Die Vorrichtung zur Verformung des Stiels (3) nach beliebigem Anspruch 7 bis 9 **gekennzeichnet dadurch, dass** das Verformungselement (2) die Form einer Druckleiste mit abgerundeter Kontaktkante besitzt.

11. Die Vorrichtung zur Verformung des Stiels (3) nach beliebigem Anspruch 7 bis 10, **gekennzeichnet dadurch, dass** das Verformungselement (2) die Gabelform mit zwei Armen (4), die mit einer Abrundung verbunden sind, besitzt, vorteilhaft mit zwei verschieden hohen Armen (4), einen längeren Anlaufarm (4) und kürzeren Ablaufarm (4).

12. Die Vorrichtung zur Verformung des Stiels (3) nach beliebigem Anspruch 7 bis 11, **gekennzeichnet dadurch, dass** sie einen pneumatischen Zylinder (5) besitzt, dessen Kolbenstange mit dem Kolbenflansch (8) verbunden ist, und an dem Kolbenflansch (8) das Verformungselement (2) angebracht ist, und auch einen Einstellungsmechanismus (7) zur Einstellung des Anschlags von reversibler Bewegung und/oder der Höhe des Verformungselements (2) besitzt.

13. Die Vorrichtung zur Verformung des Stiels (3) nach beliebigem Anspruch 7 bis 12, **gekennzeichnet dadurch, dass** sie mit der Ansteuereinheit der Produktionsstraße zwecks Gewinnung von Impulsen zur Aktivierung des Bewegungsmechanismus verknüpft ist.

14. Die Vorrichtung zur Verformung des Stiels (3) nach beliebigem Anspruch 7 bis 13, **gekennzeichnet dadurch, dass** sie tragbar, zur Installierung von verschiedenen Schweiß- Ausziehmaschinen angepasst ist, vorteilhaft ist sie zur Mehrfachinstallierung an einer Produktionsstraße angepasst.

15. Das Glasprodukt mit verformtem Stiel (3), der durch Warmziehen gebildet wird, wo die Glasoberfläche des Stiels (3) glatt ist, sie besteht ohne Anschlusskanten zwischen dem Stiel (3) und der Kuppa (1), und zwischen dem Stiel (3) und seinem Ständer, und wo der Stiel (3) am Teil zwischen der Kuppa (1) und dem Ständer des Stiels (3) wenigstens eine Durchbiegung von der Produktachse hat, **gekennzeichnet dadurch, dass** der Stiel (3) in der Durchbiegungszone gedreht ist und zwar so, dass die Tangente zur Achse des Stiels (3) wenigstens am gedrehten Teil außerhalb der Produktachsenebene verlaufen wird.

## Revendications

1. Le procédé de la fabrication du produit en verre avec la tige façonnée (3) lors duquel le produit dans le processus de sa propre fabrication se déplace sur la ligne de fabrication, fixé par la base de la tige (3) et le calice (1) ou bien fixé par la base de la tige (3) et la superforme du calice (1), étant donné que sur la ligne de fabrication, la tige est surchauffée lors du soudage au calice ou lors de l'étirage de la pré-forme jusqu'à la forme finale et au moins une partie de la tige (3) est chauffée à la température du façonnage au minimum,
est **caractérisé par le fait qu'**
avant le refroidissement du produit sur la ligne de fabrication et lorsqu'au moins une partie de sa tige (3) destinée au façonnage est chauffée à la température dans le champs de 380°C - 840°C au minimum, il arrive par mouvement réversible dans le trajet du déplacement de la tige (3) un élément de façonnage (2), étant donné que l'élément du façonnage (2) bouge dans le plan perpendiculaire à la direction du mouvement du produit sur la ligne et d'un côté, cet élément du façonnage (2) arrive en contact avec la tige en déplacement en l'oppressant (3) et en tournant (2) préférablement autors de l'axe parallèle ou égale à la direction du mouvement réversible et le résultat de cette oppression est la tige courbée et tortue.

2. Le procédé de la fabrication du produit en verre selon revendication 1, **caractérisé par le fait que** le produit dans son processus de fabrication se déplace sur la ligne de fabrication en trajet circulaire et l'élément du façonnage (2) bouge dans le plan perpendiculaire à la tangente du mouvement circulaire du produit sur la ligne.

3. Le procédé de la fabrication du produit en verre selon revendication 1 ou 2, **caractérisé par le fait que** le mouvement réversible de l'élément du façonnage (2) est linéaire/ ou de révolution ou composé de la révolution et du déplacement, et l'élément de façonnage (2) bouge à l'aide de moteur éléctrique ou hydraulique ou pneumatique, de préférence linéaire et en particulier à l'aide du cylindre pneumatique (5) et la courbure de la tige (3) est réglée par la butée de l'organe mobile de l'élément de façonnage (2).

4. Le procédé de la fabrication du produit en verre selon quelleconque des revendications 1 - 3, **caractérisé par le fait que** le mouvement de l'élément de façonnage (2) est en concertaion avec le mouvement du produit sur la ligne par connexion à l'unité de commande de la ligne et / ou par lecture de la position du produit arrivant dans la zone du façonnage.

5. Le procédé de la fabrication de produit en verre selon quelleconque des revendications 1 - 4, **caractérisé par le fait que** la tige (3) est façonnée au fur et à mesure par étapes successives sur la ligne par introduction successive des éléments du façonnage (2) au trajet de la tige (3).

6. Le procédé de la fabrication du produit en verre selon quelleconque des revendications 1 - 5, **caractérisé par le fait qu'**après le façonnage de la tige (3) et son refroidissement à la température de stabilité dimensionnelle, la superforme du calice est éliminée (1).

7. L'appareil pour former la tige (3) lors de la fabrication du produit en verre, où les produits fixés par le calice (1) et la base de la tige (3) ou par la superforme du calice (1) et la base de la tige (3) se déplacent à chaud sur la ligne, **caractérisé par le fait que**
cet appareil est équipé de l'élément de façonnage (2) qui est placé de manière mobile dans le porteur (6),
il est équipé de l'organe mobile pour le mouvement réversible de l'élément de façonnage (2) au trajet et du trajet du produit sur la ligne,
le porteur (6) est adapté à la position de la ligne d'un côté du trajet du produit de la manière pour que l'élément de façonnage mobile (2) puisse intervenir au trajet du produit sur la ligne,
l'élément de façonnage (2) est équipé de la zone de contact à bords arrondis et l'élément de façonnage (2) est placé dans l'axe de manière rotative ou pivotante, cette axe étant égale ou parallèle à la direction du mouvement réversible,
par lequel l'organe mobile est adapté pour faire tourner ou osciller l'élément de façonnage (2) au moment de son contact avec la tige (3).

8. L'appareil pour le façonnage de la tige (3) selon la revendication 7, **caractérisé par le fait que** le porteur (6) est un support qui doit être fixé au sol dans la partie appropriée de la ligne ou le porteur (6) est une console qui doit être fixée au chassis de la ligne.

9. L'appareil pour le façonnage de la tige (3) selon la revendication 7 ou 8, **caractérisé par le fait que** l'organe mobile comprend un moteur rectiligne éléctrique et/ ou rectiligne hydraulique et/ ou rectiligne pneumatique.

10. L'appareil pour le façonnage de la tige (3) selon quelleconque des revendications 7 - 9, **caractérisé par le fait que** l'élément de façonnage est en forme de barre de poussage à bord de contact arrondi.

11. L'appareil pour le façonnage de la tige (3) selon quelleconque des revendications 7 - 10, **caractérisé par le fait que** l'élément de façonnage (2) est en forme de fourche à deux bras (2) liés par congé de raccordement, les bras étant de préférence de hauteur différente (4), le bras d'attaque plus long (4) et le bras de disparition (4) plus court.

12. L'appareil pour le façonnage de la tige (3) selon quelleconque des revendications 7- 11, **caractérisé par le fait qu'**il est équipé d'un cylindre pneumatique (5) dont la tige de piston est liée à la plaque de déplacement (8) et sur cette plaque de déplacement, l'élément du façonnage (2) est fixé et il comporte un systme de réglage (7) pour régler la butée du mouvement réversible et/ ou de la hauteur de l'élément du façonnage (2).

13. L'appareil pour le façonnage de la tige (3) selon quelleconque des revendications 7 - 12, **caractérisé par le fait qu'**il est connecté à l'unité de commande de la ligne pour obtenir les impulsions afin d'activer l'organe mobile.

14. L'appareil pour le façonnage de la tige (3) selon quelleconque des revendications 7 - 13, **caractérisé par le fait qu'**il est portable, adapté aux installations des machines de soudage-étirage, approprié de préférence à installation multiple sur une ligne.

15. Le produit en verre à la tige façonnée (3) qui est créé par étirage à chaud où la surface du verre de la tige (3) est unie sans bord de connexion entre la tige (3) et le calice (1) et entre la tige (3) et sa base, et où la tige (3) dans la partie entre le calice (1) et la base de la tige (3) comporte au moins une courbure par rapport à l'axe du produit **caractérisé par le fait que** la tige (3) dans la zone courbée est tortue de la manière que la tangente à l'axe de la tige (3) dans la partie courbée au minimum, passe hors du plan de l'axe du produit.
